# EUROPEAN PATENT SPECIFICATION

(11) **EP 2 833 365 B1**
(45) Date of publication and mention of the grant of the patent: **21.03.2018**
(21) Application number: 13466015.8
(22) Date of filing: 30.07.2013
(51) Int. Cl.: G21B 3/00, H05H 6/00

(54) **Laser fusion system and method**
Laserfusionssystem und Verfahren
Système et procédé de fusion par laser

(43) Date of publication of application: 04.02.2015
(73) Proprietor: Fyzikální ústav AV CR, v.v.i., 18221 Praha 8 (CZ); Fondazione Bruno Kessler, 38122 Trento (IT)
(72) Inventor: Margarone, Daniele, 18221 Prague 8 (CZ); Korn, Georg, 18221 Prague (CZ); Picciotto, Antonino, 38122 Trento (IT); Bellutti, Pierluigi, 38122 Trento (IT)
(74) Representative: Hartvichova, Katerina

(56) References cited:
- US-A1- 2002 172 317
- US-A1- 2013 172 865
- HORA ET AL.: "Fusion energy without radioactivity: laser ignition of solid hydrogen-boron(11) fuel", ENERGY & ENVIRONMENTAL SCIENCE, vol. 3, 23 March 2010 (2010-03-23), pages 479-486, XP002717745, DOI: 10.1039/b904609g
- GHORANNEVISS ET AL.: "Candidates for Laser Fusion Energy with Minimized Radioactivity", JOURNAL OF FUSION ENERGY, vol. 32, no. 2, April 2013 (2013-04), pages 298-303, XP8166214, USA ISSN: 0164-0313, DOI: 10.1007/s10894-012-9570-0
- HORA H ET AL: "Review about acceleration of plasma by nonlinear forces from picosecond laser pulses and block generated fusion flame in uncompressed fuel", LASER AND PARTICLE BEAMS, CAMBRIDGE UNIVERSITY PRESS, CAMBRIDGE, GB, vol. 29, no. 3, 1 September 2011 (2011-09-01), pages 353-363, XP008166222, ISSN: 0263-0346, DOI: 10.1017/S0263034611000413 [retrieved on 2011-09-13]
- HORA H ET AL: "Laser-optical path to nuclear energy without radioactivity: Fusion of hydrogen-boron by nonlinear force driven plasma blocks", OPTICS COMMUNICATIONS, NORTH-HOLLAND PUBLISHING CO. AMSTERDAM, NL, vol. 282, no. 20, 15 October 2009 (2009-10-15), pages 4124-4126, XP026525406, ISSN: 0030-4018, DOI: 10.1016/J.OPTCOM.2009.07.024 [retrieved on 2009-07-28]
- MILEY ET AL.: "Ablation of nonlinear-force driven plasma blocks for fast igniter application", PROCEEDINGS OF THE SPIE - THE INTERNATIONAL SOCIETY FOR OPTICAL ENGINEERING, vol. 6261, 2006, pages 1-12, XP002717746, USA ISSN: 0277-786X, DOI: 10.1117/12.671491
- Belyaev et al.: "Observation of neutronless fusion reactions in picosecond laser plasmas", Physical Review E, vol. 72, no. 2 August 2005 (2005-08), pages 26406-1-26406-5, ISSN: 1063-651X, DOI: 10.1103/PhysRevE.72.026406 Retrieved from the Internet: URL:http://journals.aps.org/pre/pdf/10.110 3/PhysRevE.72.026406 [retrieved on 2016-08-17]
- CHAPMAN J J: "Advanced fusion reactors for space propulsion and power systems", PLASMA SCIENCE (ICOPS), 2011 ABSTRACTS IEEE INTERNATIONAL CONFERENCE ON, IEEE, 26 June 2011 (2011-06-26), page 1, XP032035929, DOI: 10.1109/PLASMA.2011.5992998 ISBN: 978-1-61284-330-8
- SPITKOVSKY ET AL.: "Laser shaping and optimization of the laser-plasma interaction", AIP CONFERENCE PROCEEDINGS, no. 569, 2001, pages 183-194, USA
- OKISHEV ET AL.: "The pulse-shaping system for the 60-beam, 30-kJ (UV) OMEGA laser", PROCEEDINGS OF THE SPIE, vol. 2770, 1996, pages 10-18, USA ISSN: 0277-786X

## Description

### FIELD OF THE INVENTION

The present invention relates to a system and a method for producing fusion reactions. The present invention further relates to a laser device and a target device for producing fusion reactions.

### BACKGROUND OF THE INVENTION

Nuclear fusion reactions, for example, the fusion of light nuclei such as hydrogen, deuterium and tritium etc. towards heavier nuclei are of particular interest for various purposes. For example, such nuclear reactions may be required for the generation of specific particles for scientific or medical purposes. Another important application of nuclear fusion reactions is the generation of electricity by utilizing the substantial release of binding energy associated with some fusion reactions.

Accordingly, there is a need for efficiently producing nuclear fusion reactions.

This problem is solved by the subject matter of the independent claims. The dependent claims define advantageous embodiments of the invention.

### SUMMARY OF THE INVENTION

Apart from scientific and medical applications, one of the most important applications for nuclear fusion reactions is the generation of energy and of electricity. The reason for this is that there are several exothermic nuclear fusion reactions, i.e. fusion reactions where binding energy of the starting products is released, for example the binding energy is released as kinetic energy of the fusion products. Since the amount of energy released by most of these fusion reactions is immense, these reactions are of particular interest with regard to the generation of energy and of electricity.

Of course, in order to generate electricity from these fusion reactions, it is necessary to guarantee that the energy output from these fusion reactions is higher than the energy required for producing these fusion reactions. Further, in order to produce electric energy, it is necessary to generate even more energy in order to overcome the conversion losses that occur during conversion of the kinetic energy of the fusion products into electric energy.

Conventional systems fail to produce fusion reactions whilst using only a suitable amount of energy.

Fusion reactions induced by laser irradiation of a target are described for example in Belyaev et al.: "Observation of neutronless fusion reactions in picosecond laser plasmas", Physical Review E, vol. 72, no. 2, August 2005 (2005-08), pages 26406-1-26406-5, ISSN: 1063-651X, DOI: 10.1103/PhysRevE.72.026406 The present invention provides a system for generating high-energy particles and for inducing nuclear reactions. The system comprises a laser source for irradiating a laser beam onto a nuclear fusion target, and a nuclear fusion target for receiving the laser beam, for producing high-energy particles and for producing nuclear fusion reactions.

The present invention also provides a laser system for emitting a laser beam, e.g. a single laser beam or a plurality of laser beams, and a nuclear fusion target for receiving a laser beam and for producing nuclear fusion reactions.

Further, the invention provides a method for producing a laser beam of high intensity with a special, temporally shaped pulse shape or a plurality of ultrashort, consecutive laser pulses for irradiating a nuclear fusion target and for producing nuclear fusion reactions.

According to an embodiment, the invention relates to a nuclear fusion target, e.g. a solid nuclear fusion target, for producing a nuclear fusion reaction of first and second particles, the target comprising a first layer comprising the first particles, and a second layer comprising the second particles.

In a preferred embodiment, the solid target comprises solid silicon, solid germanium nitride or some other dopable material.

In a preferred embodiment, the second particles comprise at least one of deuterium, tritium, boron and lithium.

In a preferred embodiment, the first layer comprises silicon and further comprises at least one of hydrogen, deuterium and tritium with a concentration of more than 10¹⁹ atoms/cm³.

In a preferred embodiment, the second layer is formed by doping silicon with the second particles, e.g. by doping silicon or germanium nitride with boron and/or lithium.

In a preferred embodiment, the second layer comprises silicon and further comprises at least one of deuterium, tritium and boron with a concentration of more than 10²⁰ atoms/cm³.

In a preferred embodiment, the first layer has a thickness of 10 nm to 10 mm, preferably 10 nm to 1 mm, and the second layer has a thickness of 10 nm to 10mm, preferably 10 nm to 1 mm.

In a preferred embodiment, the first layer is securely attached to the second layer and does not peel off or separate from the second layer upon laser irradiation.

According to an embodiment, the invention also relates to a system for producing a nuclear fusion, with the system comprising a solid target comprising first and second particles; a laser system for irradiating a laser pre-pulse onto a first surface of the target and for producing a first plasma in front of said first surface; with the laser system being configured to irradiate a main laser pulse through said first plasma onto the target, with the first plasma being configured to focus the main laser pulse onto the target; and with the focused main laser pulse being configured to accelerate at least some of the first particles of the target so as to produce fusion reactions of the accelerated first particles with at least some of the second particles of the target.

In a preferred embodiment, the solid target comprises a first layer comprising the first particles, and the solid target further comprises a second layer comprising the second particles.

In a preferred embodiment, the main laser pulse focused via the first plasma is configured to produce a second plasma having a higher density than the first plasma; and the second plasma is configured to further focus the main laser pulse onto the target.

In a preferred embodiment the laser system is configured such that the second laser pulse irradiates the target within less than 100 ns, preferably within less than 50 ns after the first laser pulse.

In a preferred embodiment, the laser pulses have a pulse length of less than 10 ns.

According to an embodiment of the invention, the laser pre-pulse and the main laser pulse are emitted in one single laser beam. According to another embodiment of the invention, the laser pre-pulse and the main laser pulse are emitted by different laser beams.

According to an embodiment of the invention, said laser pre-pulse and said main pulse are comprised in one single, temporally shaped laser pulse.

According to another embodiment of the invention, said laser pre-pulse and said main pulse are formed from two different laser pulses. Preferably, each of these pulses has a pulse length of less than 10 ns.

According to an embodiment of the invention, said laser pre-pulse and the main laser pulse are formed from two different laser pulses, with the two different pulses being separated by less than 100 ns.

According to an embodiment, the invention also relates to a nuclear fusion method for producing nuclear fusion reactions, the method comprising the steps of: irradiating a laser pre-pulse onto a nuclear fusion target; creating at least a first plasma via the laser pre-pulse; irradiating a main laser pulse onto the nuclear fusion target through the at least one first plasma, with the at least one first plasma being configured to focusing the main laser pulse onto the target; accelerating first particles of the nuclear fusion target with the focused main laser pulse; and producing fusion reactions of the accelerated first particles with second particles of the nuclear fusion target.

In a preferred embodiment, the laser system is configured such that the second laser pulse irradiates the target within less than 5 ns after the first laser pulse. According to an embodiment of the invention, said laser system is configured such that the main laser pulse irradiates the target within less than 100 ns after the laser pre-pulse (401).

According to an embodiment of the invention, the laser pre-pulse and the main laser pulse are formed from two different laser pulses, with each pulse having a pulse length of less than 10 ns. According to another embodiment of the invention, the laser pre-pulse and the main laser pulse are formed from two different laser pulses.

The present invention further relates to a laser system for irradiating a laser pre-pulse onto a first surface of a laser fusion target and for producing a first plasma in front of said first surface, with the laser system being configured to irradiate a main laser pulse through said first plasma onto the target, wherein the main pulse is focused by the first plasma onto the target and is configured to accelerate at least some of the first particles of the target so as to produce fusion reactions of the accelerated first particles with at least some of the second particles of the target.

According to an embodiment of the invention, the laser system comprises a diode pumped solid state laser having a repetition rate between 0.1 Hz and 100 Hz.

### BRIEF DESCRIPTION OF THE DRAWINGS

Figure 1 schematically illustrates an exemplary system for producing nuclear fusion reactions comprising a laser source and a laser target.
Figure 2 schematically illustrates an exemplary target for producing fusion reactions using laser radiation.
Figure 3 schematically illustrates an exemplary laser system for producing fusion reactions.
Figure 4a schematically illustrates an exemplary laser pulse shape for producing fusion reactions.
Figure 4b schematically illustrates another laser pulse shape for producing fusion reactions.
Figures 5a-5d schematically illustrate the interaction of an exemplary target with a laser pulse as illustrated in Fig. 4a or 4b.
Figure 6 schematically illustrates a method for producing fusion reactions.
Figure 7 schematically illustrates schematically illustrates an exemplary ion energy distribution for alpha-particles and protons as measured with a SiC detector and a Thomson parabola spectrometer.

### DETAILED DESCRIPTION OF THE INVENTION

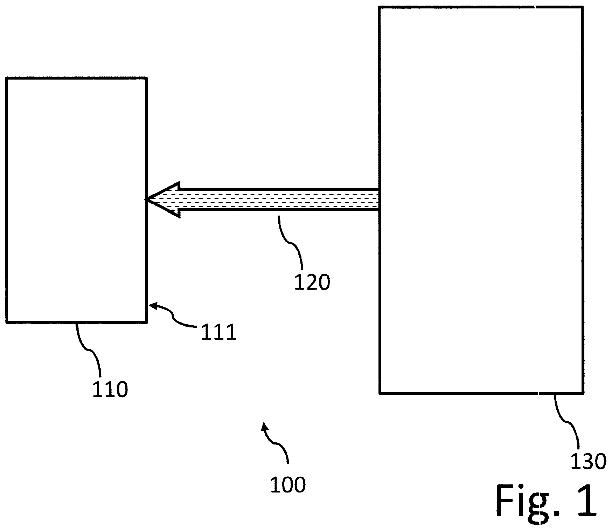

**Figure 1** schematically illustrates an exemplary system 100 for producing nuclear fusion reactions. The system illustrated in Fig. 1 includes a nuclear fusion target 110 and a laser system 130 for irradiating at least one laser beam 120 onto the target 110.

The laser system 130 may be capable of irradiating a specially shaped single laser pulse comprising at least a pre-pulse and a main pulse or a plurality of consecutive laser pulses within a given time interval onto the target 110. In a preferred embodiment of the invention, a temporally shaped single laser pulse comprising a pre-pulse and a main pulse or a series of two consecutive laser pulses is irradiated onto the target 110 in order to produce nuclear fusion reactions.

According to a preferred embodiment of the invention, the target 110 comprises first particles and second particles in order to produce fusion reactions between the at least some of the first particles and at least some of the second particles.

In an embodiment of the invention, the laser beam 120 is irradiated onto the target 110 such that at least some of the first particles are accelerated and/or heated to energies of at least several keV. The accelerated and/or heated particles collide with at least some of the second particles. At least some of these particle collisions may then result in a nuclear fusion reaction.

Typically such fusion reactions involve two starting particles and result in the ejection of two or more fusion products. Examples for such fusion reactions are:

*A*+*B → C*+*D*

The present invention can be used to produce a plurality of different fusion reactions. For example, the present invention can be used to produce exothermic fusion reactions (i.e. fusion reactions that release binding energy) and can also be used to produce endothermic fusion reactions (e.g. for generating very heavy particles, e.g. for medical or scientific purposes). Only for brevity and better readability, the following description focuses on exothermic fusion reactions. However, this must not be understood in a limiting sense since the present invention can be practiced with a plurality of different fusion reactions.

The following list is an overview over some particularly interesting fusion reactions that release large amounts of binding energy. These reactions, which can also be produced with the present invention, convert binding energy of the starting particles into kinetic energy of the resulting particles:

*D*+*D →* ³*He*(0,817*MeV*)+*n*(2,45*MeV*)

*D*+*D → T*(1,008*MeV*)+*p*(3,02*MeV*)

*D*+*T →* ⁴*He*(3,52*MeV*)+*n*(14,07*MeV*)

*p*+¹¹*B →* 3 ⁴*He*(3×2,89*MeV*)

*p*+¹¹*Li →* 2 ⁴*He*(17,4*MeV*)

Although all these fusion reactions release binding energy, they all relate to the nuclear fusion of different nuclei. Since these nuclei are positively charged, it is necessary to accelerate the starting particles to quite high energies of several keV in order to overcome the repelling coulomb forces that otherwise would just cause a reflection of the respective nuclei. Accordingly, it is necessary to accelerate and/or heat the particles to high energies.

However, even if the particle energies are high enough to produce fusion reactions, the respective fusion reaction rates or cross sections do strongly vary with the particle energies. Accordingly, in order to maximise the reaction rate, it is desirable to accelerate the particles to energies that have high reaction cross sections. In other words, it is desirable to accelerate a lot of particles to an energy that has a high probability of causing a fusion reaction.

In order to provide a laser fusion system that is capable of producing electric energy from such fusion reactions, it is necessary to produce enough particles with high enough kinetic energy so that the resulting fusion rate allows to produce more energy than was spent for generating the laser beam and the efficiency of the subsequent conversion of the kinetic energy of the produced fusion particles into heat and/or into electric energy. As will be explained in the following, this can be achieved with the present invention.

In order to ease the description of the present invention, the following description will be based on the following fusion reaction:

*p*+¹¹*B →* 3 ⁴*He*(3×2,89*MeV*)

In this reaction, a high-energy proton is collided with a boron particle to produce three helium or alpha particles with high kinetic energy of 2,89 MeV each.

Similar to the p-Li-reaction, this fusion reaction is particularly preferable compared to other fusion reactions since it is an aneutronic reaction and does not involve neutrons and radioactive products such as deuterium or tritium, and since the resulting products (i.e. the helium or alpha particles) are charged particles that can easily be captured (e.g. in a magnetic field) so as to capture their kinetic energy. Further, the reaction does neither directly nor indirectly produce high energy neutrons that could activate other materials of the reaction chamber. Accordingly, this reaction allows to build an "ultra-clean" nuclear fusion reactor and as such is highly desirable.

On the other hand, compared to other reactions, this reaction requires very high particle energies in the order of at least 10⁵ eV in order to reach suitable reaction rates. For example, if only the protons are accelerated, the maximum reaction cross section of this reaction is reached at proton energies of 600 keV to 700 keV. These particle energies are hard to obtain by conventional systems and methods. The present invention, however, is ideally suited to obtain these high particle energies whilst keeping the generated energy higher than the spent energy, as will be explained in the following.

It is to be understood that the present invention is not limited to this p-B-reaction. The p-B fusion reaction is only chosen for simplicity and brevity of the following specification. With the p-B-reaction, the first and second particles may be understood as being hydrogen and boron. It is clear that if another reaction is chosen, e.g. the D-T-reaction, the first and second particles then have to be deuterium and tritium. If, as another example, the p-Li-reaction were chosen, the first and second particles would have to be hydrogen and lithium.

Referring back to Fig. 1, the laser system 130 is configured to, for example, directly or indirectly (e.g. via intermediate mirrors) irradiate laser beam 120 onto a first surface 111 of the nuclear fusion target 110 in order to produce a nuclear fusion reaction. The laser beam is focused onto the target such that initially, only a small focal spot having a diameter in the order of, for example, 10 µm to 1000 µm is irradiated by the laser beam 120. Irradiating this portion of the first surface 111 of target 110 with a pre-pulse or a first laser pulse of the laser beam 120 causes the formation of a plasma in front of the first surface. This plasma is configured such (i.e. the laser and target parameters are chosen such) that the plasma causes a further focusing of a subsequent main pulse or further subsequent laser pulses onto the target 110, for example to a reduced focal spot size of preferably less than 10 µm. In an embodiment of the invention, the target 110 is configured such that mainly the first particles are accelerated by the laser beam 120. Although the second particles may also be accelerated by the laser beam 120, this is not necessary if the first particles get enough kinetic energy to produce fusion reactions upon collisions with the second particles.

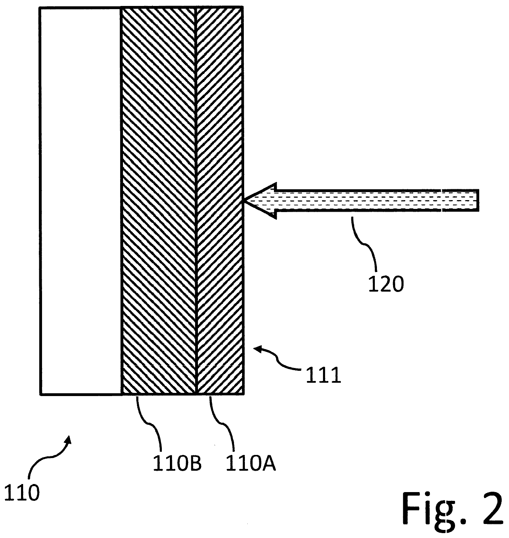

**Figure 2** schematically illustrates an exemplary target for producing a nuclear fusion reaction. The target illustrated in Fig. 2 is formed from a solid substrate material such as solid silicon (e.g. polycrystalline silicon) or gallium nitride. However, the target can also be made from any other material such as solid carbon, germanium, tin, lead, or other materials such as tungsten, alloys, polymers, frozen hydrogen, etc.

Preferably, the solid target comprises the first particles and the second particles. For example, the target may comprise a first layer comprising the first particles and a second layer comprising the second particles. In a preferred embodiment, the target material (e.g. silicon) comprises two layers, with the first layer being enriched with the first particles and the second layer being enriched with the second particles.

In the embodiment illustrated in Fig. 2, the target 110 comprises a first layer 110A, which is enriched with hydrogen in order to produce the p-B-reaction illustrated above. The hydrogen concentration in this first layer 110A is preferably higher than 10¹⁹ atoms/cm³ or 10²² atoms/cm³. According to an embodiment, the first layer 110A has a thickness of 10 nm to 10 mm. It is understood that for higher or lower energy (or fluence) lasers, these numbers will have to be adjusted.

The first layer 110A can, for example, be formed by flushing the target with a hydrogen gas for a given period of time. Within this time period, the hydrogen gas can diffuse into the silicon target material so as to form the first layer 110A. However, other methods are also suitable. For example, it would be possible to deposit such a layer onto the target using plasma deposition, chemical vapour deposition, etc., or to prepare a separate layer of hydrogen enriched material and to attach (e.g. laminate) such a layer onto the target 110.

In the embodiment illustrated in Fig. 2, the target 110 further comprises a second layer 110B, which preferably is a well-defined and well-localized layer that is highly enriched with boron in order to produce p-B-fusion reactions. The boron concentration in this second layer 110B is preferably higher than 10²⁰ atoms/cm³ or 10²³ atoms/cm³. According to an embodiment, the second layer 110B has a thickness of 10 nm to 1 mm, and preferably has a thickness of 100 nm to 5 µm.

The second layer 110B may, for example, be formed by doping the target with the second particles, e.g. by doping the target with boron. Preferably, the target is formed from solid silicon or gallium nitride, and a well-defined layer enriched with boron (in case of a p-B-reaction) is then formed in this target by doping the silicon in a given depth with the desired amount of boron. After the second layer 110B has been formed, the target is then flushed with hydrogen gas for a given amount of time such as to form the first layer 110A, which may, for example, be a highly enriched silicon-hydrogen (SiH) layer or gallium nitride hydrogen (GaNH) layer.

Preferably, the first layer 110A and the second layer 110B of the target are in direct contact with each as illustrated in Fig. 2. As an alternative, it would be possible to separate the first and second layer by an intermediate layer. However, this intermediate layer should have a thickness of preferably less than 10 µm and should securely fix the first layer to the second layer such that a separation of the two layers can be prevented. Preferably, the two layers are secured to each other such that a peeling-off or separation of the two layers can be prevented even whilst being irradiated by the laser beam 120.

According to a preferred embodiment, the target 110 is formed from a solid block of a bulk material such as silicon, and the first and second layers are formed in this bulk material, e.g. by doping the second particles into the bulk material to form the second layer 110B, and by enriching the first layer 110A with the first particles via a diffusion process. In these embodiments, any peeling or separation is effectively prevented by the solid bulk material.

In preferred embodiments of the invention, further layers may be added to the target structure described above. For example, a breeding layer could be for breeding nuclei that are necessary or helpful for enhancing or producing the desired fusion reactions. As another example, a proton multiplication layer may be added for increasing the number of protons for the fusion reaction. It is also possible to add layers for improving the energy transfer from the laser beam to the target, and/or layers for strengthening the structure of the target and/or for conducting the heat generated at the target towards the electricity generating components of the fusion reactor.

In embodiments of the invention, the target may be pre-compressed in order to increase fusion power output. For example, the above laser pre-pulse and/or main pulse as well as further laser pulses and/or laser beams (in planar or spherical geometry) may be used to pre-compress the target material.

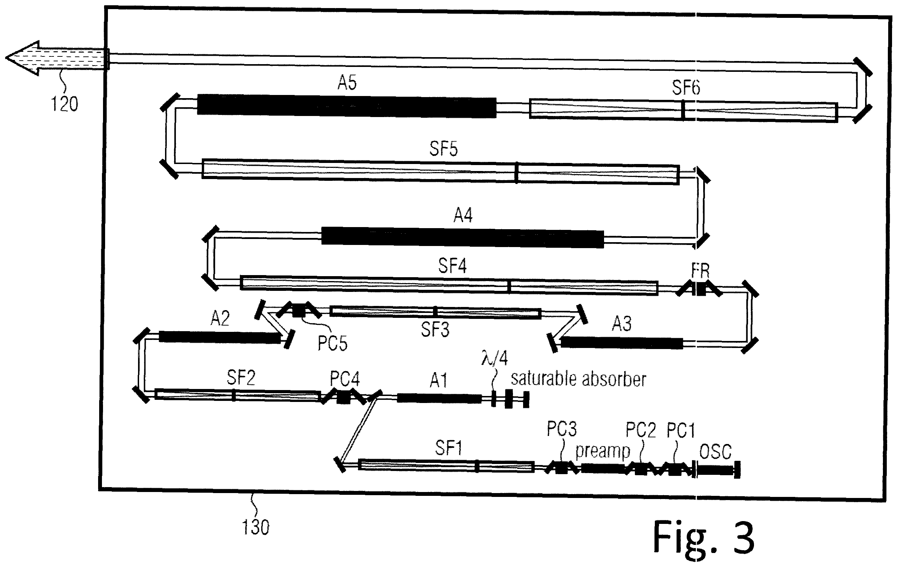

**Figure 3** schematically illustrates an exemplary laser system 130 for producing a fusion reaction. The laser system is configured to irradiate laser radiation onto a fusion target so as to produce fusion reactions at the target.

According to an embodiment of the invention, the laser system may be configured to irradiate a single laser beam or a plurality of laser beams onto the target. If a plurality of laser beams is used, the laser beams may, for example, be focused onto the same portion of the target, or at different portions of the target.

According to the invention, the laser system 130 is configured to irradiate temporally shaped laser pulses onto the target. Temporally shaped laser pulses can be defined as laser pulses whose temporal profile deviates from a Gaussian laser pulse shape.

According to a preferred embodiment of the invention, only a single laser beam is (repeatedly) irradiated onto the target. Preferably, the single laser beam comprises a single but temporally shaped laser pulse. The single laser pulse is temporally shaped and preferably comprises a so-called pre-pulse and a subsequent main pulse. In this case, pre-pulse and main pulse are part of one single pulse, i.e. are formed from one single pulse. As will be illustrated below, the pre-pulse preferably has a laser intensity that is much lower than the intensity of the main pulse.

According to another preferred embodiment of the invention, a series of laser pulses is irradiated onto the target. The different laser pulses comprised in this series of laser pulses may be generated from one single laser beam or from a plurality of laser beams. Preferably, a series of two laser pulses is irradiated onto the target within a pre-defined time interval. The first pulse preferably has a laser intensity that is much lower than the intensity of the second laser pulse, so that the first laser pulse may be regarded as a pre-pulse and the second laser pulse may be regarded as a main pulse.

As will be illustrated below, the pre-pulse can preferably be used to generate a plasma in front of the target. The plasma extends in front of the target and can - if the plasma properties such as density, temperature, density gradient, temperature gradient, size, degree of ionization, etc. are chosen suitably - be utilized to focus a subsequent main laser pulse onto the target. The self-focusing of the main laser pulse allows to generate laser intensities of the focused main laser pulse that are 2-3 orders of magnitude higher than the nominal intensity of the originally emitted laser pulse. This allows to very efficiently generate fusion reactions in the target, and further allows to effectively produce electric energy from fusion reactions. The present invention allows to reduce the required laser intensities by 2-3 orders of magnitude compared to conventional systems.

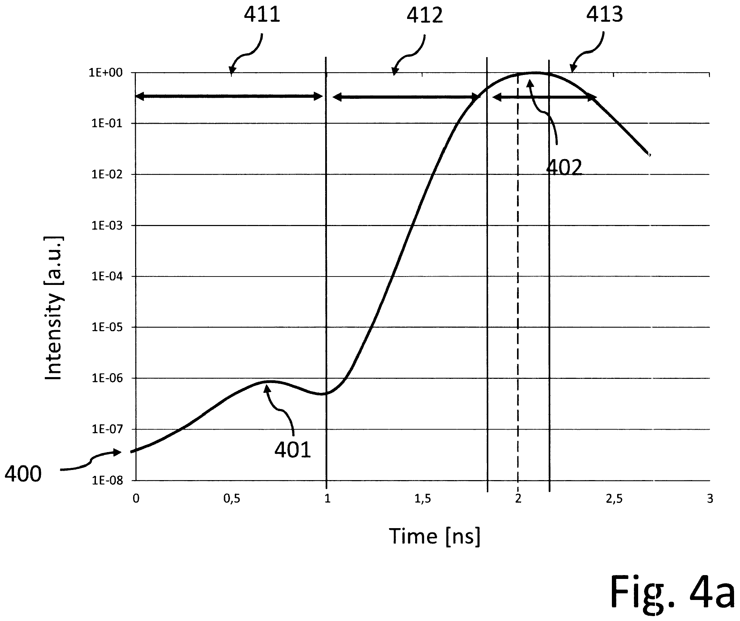

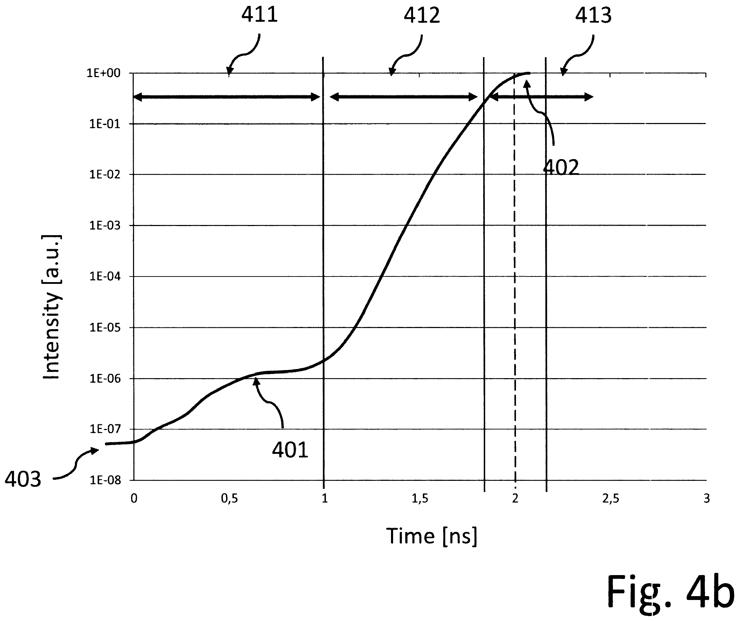

According to the invention, the laser system is configured to emit a high-energy laser beam comprising a temporally shaped laser pulse comprising a pre-pulse and a main pulse or a series of at least two short laser pulses (i.e. a pre-pulse and a main pulse) within a short time period of about 0,1 ns to 5 ns, preferably within a short time period of about 1 ns to 2 ns, as will be further described below with regard to Figures 4a and 4b.

The laser system preferably emits laser light at a wavelength between 250 nm and 2000 nm, and preferably emits laser light at a wavelength between 700 nm and 1500 nm, for example at a wavelength of 1315 nm or around 1.0-1.2 µm. However, other wavelengths could be used as well.

A suitable laser system for emitting such a laser beam is, for example, an iodine laser such as the PALS laser (cf. K. Jungwirth et al., Phys. Plasmas 8, 2495, 2001). It is understood that for useful energy production, a laser driver with high repetition rate and high optical wall plug efficiency and energy storage capacity is required. These laser sources are known as diode pumped solid state lasers (DPSSL). It is further understood that different pulse forming techniques can be used in DPSSLs to generate the required optimum pulse shape illustrated below for high fusion energy output in the considered reactions. Examples are Yb:YAG, ND: glass lasers, etc. As an example, we have used an iodine laser with the following parameters for demonstration and analysis of the underlying principle.

Preferably, the laser system is capable to deliver infrared pulses with a nominal energy of 100 J to 10000 J, preferably with a nominal energy in the order of 1000 J. This nominal energy can then be split so as to obtain a first pulse (e.g. the pre-pulse) and a second pulse (e.g. the main pulse). The second or main pulse may, for example, have an energy of about 200 J to 2000 J, preferably between 500 J and 1000 J, for example 600 J.

The pulse length of the laser pulses may, for example, be in the range 10 ps to 10 ns for the first pulse and may, for example, be in the range 10 fs to 10 ns in for the second or main pulse. According to a preferred embodiment, the pulse lengths are between 100 ps and 1000 ps, more preferably between 200 and 400 ps, for example 350 ps. With an exemplary pulse length of 350 ps and a nominal energy of 1000 J, the peak power of the laser beam is 3 TW. With an energy of 600 J for the second (i.e. main) pulse, the peak power delivered in this pulse is almost 2TW.

Preferably, the laser beam is focused via a lens system to a focal spot diameter at the target. In an embodiment, the focal spot diameter at the target is between 10 µm and 1000 µm, preferably between 50 µm and 200 µm, for example 100 µm.

In the embodiment illustrated in Fig. 3, which shows an embodiment using the PALS laser (cf. K. Jungwirth et al., Phys. Plasmas 8, 2495, 2001), the laser beam originates from an oscillator OSC and then travels through an amplifier chain comprising a plurality of amplifier A1 to A5. The oscillator preferably consists of a master oscillator and a pre-amplifier. The master oscillator generates a sequence of several identical light pulses from which one of them is chosen for later amplification by the help of Pockels cells PC1, PC2, PC3. The choice of the main pulse is triggered with the previous pulse coming through the spark gap switching on the Pockels cells PC1-PC3 in Fig. 3. This pulse also opens the cells PC4 and PC5 later on the pulse path. The main pulse is then released into the pre-amplifier PREAMP and leaving it with an energy of, for example, 10 mJ.

This main pulse may then be amplified, for example in a chain of power laser amplifiers. In the exemplary embodiment illustrated in Fig. 3, the laser amplification chain consists of five power amplifiers A1 - A5, which amplify the laser pulses from the oscillator part to the energies indicated above, e.g. to energies of about 1000 J. The power amplifiers A1 - A5 may, for example, be cuvettes filled by C₃F₇I gas. This gas uses iodine atoms for generation of a narrow infrared line at 1315 nm. This wavelength is generated from the iodine atoms in the gas medium obtained from the alkyl iodide molecule C₃F₇I by a photochemical process called photolysis. The atom is released from the chemical bond using UV pulses from a flash lamp. The electron envelope coming from the photolysis reaction is excited and the inversion population is made automatically and the beam can be further amplified to high power.

The amplifier cuvettes are surrounded by the flash lamps, which may be charged using capacitors. An intensive flash of the non-coherent UV radiation produced by the lamps will create a high number of excited iodine atoms and their de-excitation will increase the energy of the laser going through the cuvette. In order to keep the power density of the laser beam below a threshold value at which the surface of the optics might be damaged, the laser size is increased from amplifier to amplifier, e.g. increases from an initial dimension of 8mm to an output size of 290mm, by optical telescopes, e.g. spatial filters SF1 - SF6 made by two convex lenses. In order to avoid amplification of the back-scattered beam portions, which could lead to damage of the first amplification stage, a Faraday rotator FR may be placed after the third laser amplifier A3 as shown in Fig. 3.

According to a preferred embodiment, the laser 130 is configured to split-off a pre-pulse so as to produce a pre-pulse and a main pulse.

As indicated above with regard to Fig. 2, the laser is then irradiated onto the target and is focused on the target so as to result in a focal spot size as indicated above.

**Figure 4a** schematically illustrates the shape 400 of an exemplary laser pulse for producing a fusion reaction. The pulse shape illustrated in Fig. 4a consists of a pre-pulse 401 and a main pulse 402: The pre-pulse 401 has its maximum intensity at a time of about 0,7 ns, and the main pulse has its maximum intensity at about 2,1 ns. Accordingly, the maximum of the main pulse in Fig. 4a occurs about 1,4 ns after the maximum of the pre-pulse. The pre-pulse and the main pulse illustrated in Fig. 4a may be formed from a single laser pulse (e.g. by splitting off the pre-pulse), or may also be generated from different laser pulses and/or different beam lines. As illustrated in Fig. 4a, the pre-pulse and the main pulse do not have to be sharply separated from each other but may at least overlay at least partially.

In a preferred embodiment of the invention, the maximum of the main laser pulse 402 occurs between 1 ns and 5 ns after the maximum of the first laser pulse 401, and preferably occurs between 1,4 ns and 1,6 ns after the maximum of the first laser pulse 401. As will be illustrated below, the time difference between the pulses allows the formation of a plasma in front of the target such that the plasma can be used to better focus the main laser pulse onto the target.

Preferably, the intensity of the laser pre-pulse 401 is about a factor of 10⁷ to 10⁴, preferably 10⁶ to 10⁵ lower than the intensity of the main laser pulse 402.

In the example shown in Fig. 4a, the width of the laser pulses 401, 402 is 350 ps. In other embodiments, the pulse width could, for example, be in a range of 10 ps to 10 ns. The width of the laser pulses can be identical, but can also be different. A consecutive series of two or more laser pulses or a temporally shaped single pulses comprising a plurality of laser pulse parts can be generated using one single laser, e.g. by splitting off one or several pre-pulses. In another embodiment, the laser pulses can be generated by different lasers, e.g. by using a low-power laser for a first laser pulse (pre-pulse) and by using a high power laser for a second laser pulse (main pulse).

In a preferred embodiment, a series of two laser pulses 401, 402 may be used. The first laser pulse 401 is preferably split-off as a so-called pre-pulse from the main pulse. The remaining portion of the main beam is then used as the second laser pulse 402. The pre-pulse can be split-off at any stage of the amplifier cascade of the laser system so as to achieve the desired intensity of the first laser pulse 401.

After the maximum of the main pulse, it is suggestible to keep the laser power at a high level for a short time in order to produce a substantial number of fusion reactions. The optimum duration of the high power phase depends strongly on the target and laser properties and should preferably be in the range of 1 ns to 1 µs.

**Figure 4b** illustrates an exemplary laser pulse shape 420 for inducing a fusion reaction using the laser system described in Fig. 3. The pulse shape illustrated in Fig. 4b also consists of a pre-pulse 401 and a subsequent main pulse 402: The pre-pulse 401 has its maximum intensity at a time of about 0,68 ns, and the main pulse 402 has its maximum intensity at about 2,14 ns.

Compared to the pulse shape illustrated in Fig. 4a, the pre-pulse and the main pulse show a more pronounced superposition, so that, after the pre-pulse, the total intensity does not drop off as illustrated in Fig. 4a but remains approximately constant due to the superposition of the pre-pulse and the main pulse. Accordingly, there is no sharp separation between the pre-pulse and the main pulse.

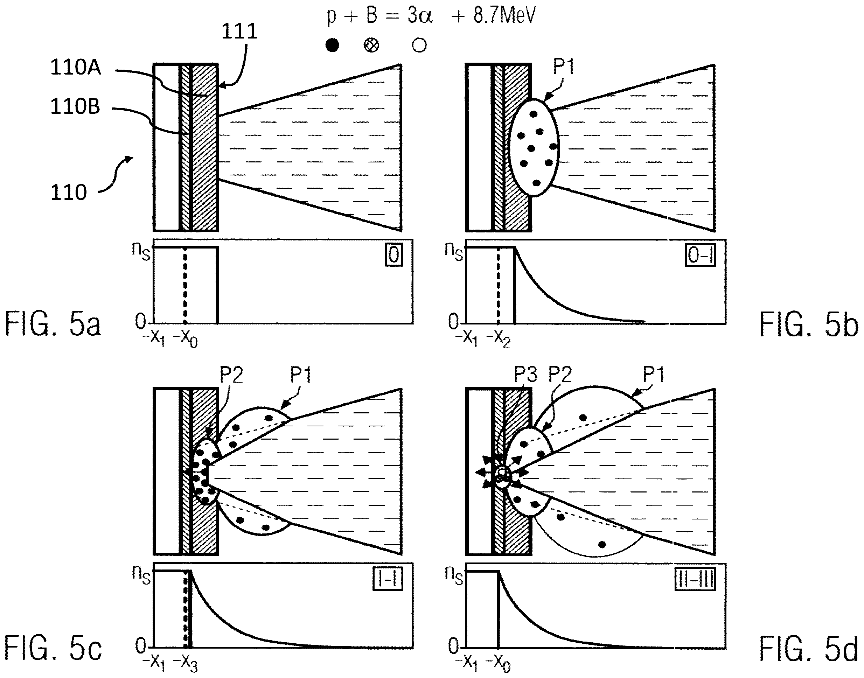

When a laser beam as explained with regard to Fig. 4a or Fig. 4 is irradiated onto a target, e.g. onto the target structure explained with regard to Fig. 2, the interaction between laser beam and target can roughly be grouped into three different phases, which will now be explained with regard to Figs. 4a, 4b and Figs. 5a to d:

**Fig. 5a** shows the target 110 and the laser beam 120 directly before the laser beam 120 impacts on the target 110.

**Fig. 5b** illustrates the first phase 411, which is associated with the interaction of the laser pre-pulse 401 with the target 200. In this phase, the pre-pulse 401 is irradiated onto the silicon-hydrogen (SiH) surface layer 110A of the target 110 and causes the ablation of the SiH layer and the formation of a first, low-density plasma P1. This localized plasma P1 is generated by the energy transfer from the pre-pulse of the laser beam to the target particles and the associated heating and ionization of the target particles. The plasma P1 comprises evaporated silicon and hydrogen as well as a large fraction of (partially and/or fully) ionized silicon atoms and ionized hydrogen atoms (i.e. protons), and a corresponding portion of electrons. In this first phase 411, the boron layer 110B of the target 110 is still unperturbed and does not yet interact with the laser beam 120. It is understood that, if other materials are used, the plasma composition varies accordingly.

**Fig.5c** illustrates the second phase 412, which follows the first phase 411 and is associated with the ramp-up-phase of the main laser pulse 402. In this phase, the laser beam further interacts with the target and generates a high density plasma P2 as more material from the SiH layer 110A is ablated from the target. As can be seen from Fig. 5c, the first plasma P1 expands away from the target. The dimension of the first plasma is, for example, in the order of 5 µm and can extend up to a dimension of 5 mm. The plasma density decays exponentially with distance from the target surface as illustrated in Fig. 5c, and the SiH layer 110A is almost fully ablated at the interaction spot after this phase.

Further, in the second phase 412, a so-called self-focusing or focusing mechanism is initiated. The focusing effect is, for example, produced by the electric field gradient resulting from the electron density gradient in the first plasma P1, but may also be generated by other mechanisms such as thermal effects (e.g. thermally induced hydrodynamic expansion which changes the density gradient and the refraction index of the plasma) or relativistic effects (e.g. through the mass increase of relativistic electrons, which also change the density gradient and the refraction index of the plasma). The focusing effect leads to a further focusing of the subsequent laser pulse part as will be explained below:

**Fig. 5d** illustrates the third phase 413, which follows the second phase 412 and is associated with the main part of the main laser pulse 402. In this phase, the laser beam further interacts with the first plasma P1, the second plasma P2, and the target.

The interaction of the main part of the main laser pulse 402 with the first plasma P1 and the second plasma P2 causes a maximization of the self-focusing effect as the respective plasma densities and gradients are further increased. The dimensions of the second plasma P2 are, for example, in the range of 10 µm to 1 mm. The interaction with the second plasma P2 causes a strong acceleration of the protons comprised in the plasma, so that the critical plasma density for inducing fusion reactions is reached. The accelerated protons of the second plasma P2 have a maximum energy of 0,1 MeV - 5 MeV, and preferably have a maximum energy of 500 keV - 2 MeV, which is compatible with an effective laser intensity of 5x10¹⁸-10¹⁹ W/cm², which is much higher than the nominal laser intensity. The reason for this is the focusing of the laser through the plasma generated in front of the target. The accelerated protons with highest velocity (kinetic energy) of the second plasma P2 propagate through the high density plasma P2 and ionize the boron atoms of the second layer 110B of the target 110, which up to now where still unperturbed and have a solid state particle density in the order of 10²² cm⁻³. The ionized boron atoms form a third plasma P3, which may have dimensions in the order of 1 µm to 100 µm. The rest of the accelerated protons of the second plasma P2 with lower velocity (kinetic energy) then collide with the ionized boron atoms and thereby induce the fusion reaction illustrated above:

*p*+¹¹*B →* 3 ⁴*He*(3×2,89*MeV*)

The resulting alpha particles have high kinetic energy and either hit the target 110, thereby heating the target or propagate away from the target 110 to hit and hear the surrounding reacting chamber. The heat generated at the target and/or the reaction chamber can then be used to generate electric energy or electricity by conventional methods as known to those skilled in the art.

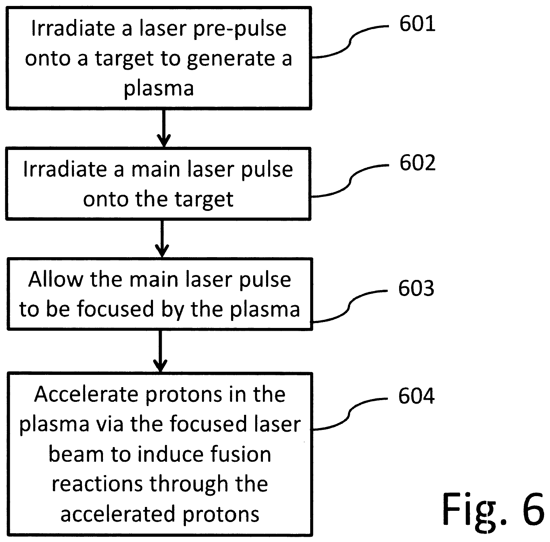

**Fig. 6** schematically illustrates a corresponding method for inducing a fusion reaction.

In a first step 601 of this method, a laser pre-pulse is irradiated onto a target in order to generate a plasma at the target. The laser pre-pulse can, for example, be a first laser pulse 401 comprised in a series of laser pulses, or can be a part of a temporally shaped laser pulse comprising the pre-pulse and a main pulse as described above. The plasma can, for example, be a low density plasma such as the plasma P1 described above with regard to Figures 4 and 5.

In a second step 602 of this method, a main laser pulse is irradiated onto the target. The main pulse can, for example, be a second laser pulse of a series of laser pulses, or can be a part of a temporally shaped laser pulse comprising the pre-pulse and the main pulse as described above. As further described above, the main pulse can be used to generate a high-density plasma P2 from a first layer of a target such as the target 110 described above.

In a second step 603, the plasma P1 generated in front of target 110 via the pre-pulse focuses the main laser pulse . For example, the main laser pulse can be focused via the plasma P1 as described above with regard to Figs. 4 and 5.

In a second step 603, the focused main laser pulse is used to accelerate protons in the plasma. The accelerated protons can then be used to induce fusion reactions, for example to induce fusion reactions with particles from the second layer 110B of the target 110 as described above.

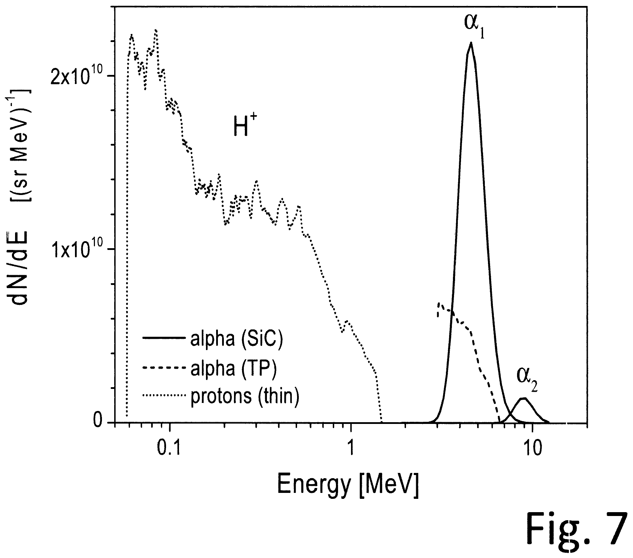

**Figure 7** schematically illustrates an exemplary ion energy distribution for alpha-particles (α₁ and α₂) and protons (H⁺) as measured with a SiC detector and a Thomson Parabola spectrometer. (dashed line), and forward proton energy distribution measured by TP when a thin target was used.

The method and system illustrated above allows obtaining an enormous increase in the number of alpha particles produced in the nuclear fusion reaction. The number of alpha particles is about 10⁹-10¹⁰/sr and thus is 10⁶ times higher than conventional methods although the used laser pulse only has a nominal intensity of 10¹⁶W/cm² and thus is 100 times lower than the laser intensity used in conventional systems.

It is to be understood that the above exemplary embodiments are intended to illustrate specific embodiments and are not to be understood in a limiting sense. Further, it is to be understood that the various aspects described herein can be combined unless specifically stated otherwise.

It is to be understood that the invention is not limited to the specific p-B fusion reaction described above. In contrast, the present invention can be used to induce a large variety of endothermic or exothermic fusion reactions. In order to induce these fusion reactions, some of the specific values described above may have to be adapted to the specific requirements and the physical processes. For example, it may be necessary to adapt the number, energy and pulse widths or wavelengths of the laser pulses in order to obtain a suitable self-focusing of the laser beam and a suitable energy transfer onto the target. It may also be necessary to adapt the dimensions and particle concentrations of the target to the specific requirements of the desired fusion reaction.

With regard to the laser, there is a relation between laser energy, laser pulse duration and focal spot size. Accordingly, it may be necessary to adapt these parameters to each other. For example, if the focal spot size is increased, it may be necessary to also increase the total laser power, either by decreasing the laser pulse length or by increasing the laser pulse energy.

The invention is in any case defined by the appended claims.

## Claims

1. A nuclear fusion method for producing nuclear fusion reactions, comprising irradiating a main laser pulse onto a nuclear fusion target, **characterized in that** said method comprises the steps of:
providing a solid target (110) comprising first and second particles; irradiating a laser pre-pulse (401) onto said nuclear fusion target (110); creating at least a first plasma (P1) via the laser pre-pulse (401);
irradiating a main laser pulse (402) onto the nuclear fusion target (110) through the at least one first plasma (P1), with the at least one first plasma (P1) focusing the main laser pulse (402) onto the target (110);
accelerating first particles of the nuclear fusion target (110) with the focused main laser pulse (402); and
producing fusion reactions of the accelerated first particles with second particles of the nuclear fusion target (110),
wherein said laser pre-pulse (401) and said main laser pulse (402) are temporally shaped.

2. The method of claim 1, wherein the main laser pulse (402) irradiates the target (110) within less than 100 ns after the laser pre-pulse (401).

3. The method of claim 1, wherein the main laser pulse (402) irradiates the target (110) within less than 5 ns after the laser pre-pulse (401).

4. The method of any one of the preceding claims, wherein the laser pre-pulse (401) and the main laser pulse (402) are comprised in one single, temporally shaped laser pulse.

5. The method of claim 1, wherein the laser pre-pulse (401) and the main laser pulse (402) are formed from two different laser pulses, with the two different pulses being separated by less than 100 ns.

6. The method of any one of the preceding claims further comprising the steps of: producing a second plasma (P2) of a higher density than the first plasma (P1) by focusing the main laser pulse (402) via the first plasma (P1); and further focusing the main laser pulse (402) onto the target (110) via the second plasma (P2).

7. The method of any one of the preceding claims, wherein the solid nuclear fusion target (110) comprises a first layer (110A) comprising the first particles and a second layer (110B) comprising the second particles.

8. The method of claim 7, wherein the solid target comprises at least one of solid silicon and gallium nitride and germanium nitride.

9. The method of any one of claims 7 or 8, wherein the second particles comprise at least one of deuterium, tritium, boron and lithium.

10. The method of any one of claims 7 to 9, wherein the second layer (110B) is formed by doping silicon with the second particles.

11. The method of any one of claims 7 to 10, wherein the first layer (110A) has a thickness of 10 nm to 10 mm, and wherein the second layer (110B) has a thickness of 10 nm to 10 mm.

12. The method of any one of claims 7 to 11, wherein the first layer (110A) is securely attached to the second layer (110B) and does not peel off upon laser irradiation.

13. A system (100) for producing a nuclear fusion, the systemcomprising:
a solid target (110) comprising first and second particles;
a laser system (130) for irradiating a temporally shaped laser pre-pulse (401) onto a first surface (111) of the target (110) and for producing a first plasma (P1) in front of said first surface (111);
with the laser system (130) being configured to irradiate a temporally shaped main laser pulse (402) through said first plasma (P1) onto the target,
said first plasma (P1) for focusing the main laser pulse(402) onto the target (110); and
with the focused main laser pulse (402) being configured to accelerate at least some of the first particles of the target (110) so as to produce fusion reactions of the accelerated first particles with at least some of the second particles of the target (110),
wherein the main laser pulse (402) focused via the first plasma (P1) is configured to produce a second plasma (P2) having a higher density than the first plasma (P1); and
said second plasma (P2) for further focusing the main laser pulse (402) onto the target.

## Patentansprüche

1. Kernfusionsverfahren zur Herstellung von Kernfusionsreaktionen, umfassend das Bestrahlen eines Hauptlaserimpulses auf ein Kernfusionstarget, **dadurch gekennzeichnet, dass** das Verfahren die folgenden Schritte umfasst:
Bereitstellen eines festen Targets (110), umfassend erste und zweite Partikel;
Bestrahlen eines Laser-Vorimpulses (401) auf das Kernfusionstarget (110);
Erzeugen mindestens eines ersten Plasmas (P1) über den Laser-Vorimpuls (401);
Bestrahlen eines Hauptlaserimpulses (402) auf das Kernfusionstarget (110) durch das mindestens eine erste Plasma (P1), wobei das mindestens eine erste Plasma (P1) den Hauptlaserimpuls (402) auf das Target (110) fokussiert;
Beschleunigen die erste Partikel des Kernfusionstargets (110) mit dem fokussierten Hauptlaserimpuls (402); und
Erzeugen von Fusionsreaktionen die beschleunigten ersten Partikel mit zweiten Partikeln des Kernfusionstargets (110),
wobei der Laser-Vorimpuls (401) und der Hauptlaserimpuls (402) temporär geformt sind.

2. Verfahren nach Anspruch 1, wobei der Hauptlaserimpuls (402) das Target (110) innerhalb von weniger als 100 ns nach dem Laser-Vorimpuls (401) bestrahlt.

3. Verfahren nach Anspruch 1, wobei der Hauptlaserimpuls (402) das Target (110) innerhalb von weniger als 5 ns nach dem Laser-Vorimpuls (401) bestrahlt.

4. Verfahren nach einem der vorhergehenden Ansprüche, wobei der Laser-Vorimpuls (401) und der Hauptlaserimpuls (402) in einem einzigen, temporär geformten Laserimpuls enthalten sind.

5. Verfahren nach Anspruch 1, wobei der Laser-Vorimpuls (401) und der Hauptlaserimpuls (402) aus zwei unterschiedlichen Laserimpulsen gebildet werden, wobei die zwei unterschiedlichen Impulse um weniger als 100 ns voneinander getrennt sind.

6. Verfahren nach einem der vorhergehenden Ansprüche, ferner umfassend die Schritte: Erzeugen eines zweiten Plasmas (P2) mit einer höheren Dichte als das erste Plasma (P1) durch Fokussieren des Hauptlaserimpulses (402) über das erste Plasma (P1); und ferner Fokussieren des Hauptlaserimpulses (402) auf das Target (110) über das zweite Plasma (P2).

7. Verfahren nach einem der vorhergehenden Ansprüche, wobei das feste Kernfusionstarget (110) eine erste Schicht (110A) umfasst, die die ersten Partikel umfasst, und eine zweite Schicht (110B) umfasst, die die zweiten Partikel umfasst.

8. Verfahren nach Anspruch 7, wobei das feste Target mindestens eines von festem Silizium und Galliumnitrid und Germaniumnitrid umfasst.

9. Verfahren nach einem der Ansprüche 7 oder 8, wobei die zweiten Partikel mindestens eines von Deuterium, Tritium, Bor und Lithium umfassen.

10. Verfahren nach einem der Ansprüche 7 bis 9, wobei die zweite Schicht (110B) durch Dotieren von Silizium mit den zweiten Partikeln gebildet wird.

11. Verfahren nach einem der Ansprüche 7 bis 10, wobei die erste Schicht (110A) eine Dicke von 10 nm bis 10 mm aufweist und wobei die zweite Schicht (110B) eine Dicke von 10 nm bis 10 mm aufweist.

12. Verfahren nach einem der Ansprüche 7 bis 11, wobei die erste Schicht (110A) sicher an der zweiten Schicht (110B) befestigt ist und sich bei Laserbestrahlung nicht ablöst.

13. System (100) zum Erzeugen einer Kernfusion, wobei das System umfasst: ein festes Target (110), das erste und zweite Partikel umfasst;
ein Lasersystem (130) zum Bestrahlen eines temporär geformten Laser-Vorimpulses (401) auf eine erste Oberfläche (111) des Targets (110) und zum Erzeugen eines ersten Plasmas (P1) vor der ersten Oberfläche (111);
wobei das Lasersystem (130) dazu konfiguriert ist, einen temporär geformten Hauptlaserimpuls (402) durch das erste Plasma (P1) auf das Target zu bestrahlen,
das erste Plasma (P1) zum Fokussieren des Hauptlaserimpulses (402) auf das Target (110); und
wobei der fokussierte Hauptlaserimpuls (402) so konfiguriert ist, dass er zumindest einige der ersten Partikel des Targets (110) beschleunigt, um Fusionsreaktionen der beschleunigten ersten Partikel mit mindestens einigen der zweiten Partikel des Targets (110),
wobei der über das erste Plasma (P1) fokussierte Hauptlaserimpuls (402) konfiguriert ist, um ein zweites Plasma (P2) mit einer höheren Dichte als das erste Plasma (P1) zu erzeugen; und das zweite Plasma (P2) zum weiteren Fokussieren des Hauptlaserimpulses (402) auf das Target.

## Revendications

1. Procédé de fusion nucléaire pour produire des réactions de fusion nucléaire, comprenant l'irradiation d'une impulsion laser principale sur une cible de fusion nucléaire, **caractérisé en ce que** ledit procédé comprend les étapes consistant à:
fournir une cible solide (110) comprenant des premières et secondes particules;
irradier une pré-impulsion laser (401) sur ladite cible de fusion nucléaire (110); créer au moins un premier plasma (P1) par la pré-impulsion laser (401);
irradier une impulsion laser principale (402) sur la cible de fusion nucléaire (110) à travers le au moins un premier plasma (P1), ledit au moins un premier plasma (P1) focalisant l'impulsion laser principale (402) sur la cible (110);
l'accélération des premières particules de la cible de fusion nucléaire (110) avec l'impulsion laser principale focalisée (402); et
produire des réactions de fusion des premières particules accélérées avec des secondes particules de la cible de fusion nucléaire (110),
dans ledit procédé, ladite pré-impulsion laser (401) et ladite impulsion laser principale (402) ont une forme temporelle.

2. Procédé selon la revendication 1, dans lequel l'impulsion laser principale (402) irradie la cible (110) en moins de 100 ns après la pré-impulsion laser (401).

3. Procédé selon la revendication 1, dans lequel l'impulsion laser principale (402) irradie la cible (110) en moins de 5 ns après la pré-impulsion laser (401).

4. Procédé selon l'une quelconque des revendications précédentes, dans lequel la pré-impulsion laser (401) et l'impulsion laser principale (402) sont comprises dans une seule impulsion laser ayant une forme temporelle.

5. Procédé selon la revendication 1, dans lequel la pré-impulsion laser (401) et l'impulsion laser principale (402) sont formées à partir de deux impulsions laser différentes, les deux impulsions différentes étant séparées de moins de 100 ns.

6. Procédé selon l'une quelconque des revendications précédentes, comprenant en outre les étapes suivantes: produire un deuxième plasma (P2) d'une densité plus élevée que le premier plasma (P1) en focalisant l'impulsion laser principale (402) via le premier plasma (P1); et focaliser davantage l'impulsion laser principale (402) sur la cible (110) via le deuxième plasma (P2).

7. Procédé selon l'une quelconque des revendications précédentes, dans lequel la cible solide de fusion nucléaire (110) comprend une première couche (110A) comprenant les premières particules et une deuxième couche (110B) comprenant les secondes particules.

8. Procédé selon la revendication 7, dans lequel la cible solide comprend au moins un élément parmi le silicium solide, le nitrure de gallium et le nitrure de germanium.

9. Procédé selon l'une quelconque des revendications 7 ou 8, dans lequel les secondes particules comprennent au moins un élément parmi le deutérium, le tritium, le bore et le lithium.

10. Procédé selon l'une quelconque des revendications 7 à 9, dans lequel la seconde couche (110B) est formée en dopant du silicium avec les secondes particules.

11. Procédé selon l'une quelconque des revendications 7 à 10, dans lequel la première couche (110A) a une épaisseur de 10 nm à 10 mm, et dans lequel la seconde couche (110B) a une épaisseur de 10 nm à 10 mm.

12. Procédé selon l'une quelconque des revendications 7 à 11, dans lequel la première couche (110A) est solidement fixée à la seconde couche (110B) et ne se décolle pas lors d'une irradiation laser.

13. Système (100) pour produire une fusion nucléaire, le système comprenant:
une cible solide (110) comprenant des premières et secondes particules;
un système laser (130) pour irradier une pré-impulsion laser ayant une forme temporelle (401) sur une première surface (111) de la cible (110) et pour produire un premier plasma (P1) devant ladite première surface;
le système laser (130) étant configuré pour irradier une impulsion laser principale ayant une forme temporelle (402) à travers ledit premier plasma (P1) sur la cible,
ledit premier plasma (P1) pour focaliser l'impulsion laser principale (402) sur la cible (110); et l'impulsion laser principale focalisée (402) étant configurée pour accélérer au moins certaines des premières particules de la cible (110) de manière à produire des réactions de fusion des premières particules accélérées avec au moins certaines des secondes particules de la cible (110),
dans lequel l'impulsion laser principale (402) focalisée via du premier plasma (P1) est configurée pour produire un deuxième plasma (P2) ayant une densité plus élevée que le premier plasma (P1); et
ledit second plasma (P2) pour focaliser davantage l'impulsion laser principale (402) sur la cible.
